# EUROPÄISCHE PATENTSCHRIFT

(11) **EP 0 555 774 B1**
(45) Veröffentlichungstag und Bekanntmachung des Hinweises auf die Patenterteilung: **18.09.1996**
(21) Anmeldenummer: 93101762.8
(22) Anmeldetag: 05.02.1993
(51) Int. Cl.: C08F 8/32

(54) **Verfahren zur Herstellung von wässrigen, selbstvernetzenden Polymerdispersionen und ihre Verwendung als Bindemittel für lagerstabile Einkomponentenlacke**
Process for the preparation of aqueous self-crosslinking polymer dispersions and their use as binders for storage-stable one-component paints
Procédé de préparation de polymères aqueux auto-réticulables et leur application comme liants pour peintures à un seul constituant stables au stockage

(30) Priorität: 14.02.1992 AT 248/92
(43) Veröffentlichungstag der Anmeldung: 18.08.1993
(73) Patentinhaber: Vianova Resins AG, A-8402 Werndorf (AT)
(72) Erfinder: Kriessmann, Ingo, Dr., A-8010 Graz (AT); Awad, Rami-Raimund, Dipl.-Ing., A-8042 Graz (AT); Weiss, Günter, A-8047 Graz (AT)

(56) Entgegenhaltungen:
- EP-A- 0 358 358
- EP-A- 0 372 804
- EP-A- 0 390 370
- GB-A- 1 185 216
- US-A- 3 668 183
- US-A- 4 743 668

## Beschreibung

Die Erfindung betrifft ein Verfahren zur Herstellung von wäßrigen, selbstvernetzenden Polymerdispersionen auf der Basis von Acetoacetyl- und Carboxylgruppen aufweisenden Acrylatcopolymerisaten, welche mit einem als Vernetzungskomponente wirkenden Polyamin neutralisiert sind, und ihre Verwendung als Bindemittel für lagerstabile Einkomponentenlacke, welche bei Raumtemperatur oder bei erhöhter Temperatur vernetzen.

Acetoacetylgruppen enthaltende Lackbindemittel sind in der Literatur beschrieben und deshalb von Interesse, weil sie verschiedenen Vernetzungsreaktionen zugänglich sind. So können die Acetoacetylgruppen über die aktivierte Methylengruppe mit Melaminharzen, mit Isocyanatgruppen oder mit Aldehyden, und über die Carboxylgruppe in der Enolform mit Aminen reagieren.

Auf die Verwendung von Diaminen zur Vernetzung von Acetoacetylgruppen aufweisenden Polymeren wird in einem Vortrag auf der XVI th International Conference in Organic Coatings Science and Technology in Athen, July 1990 (Robert J. Clemens et al., Proceedings 16, Seite 127 ff.) hingewiesen. Es handelt sich aber offensichtlich um Zweikomponenten-Systeme.

Auch in der EP-A1-0390370 wird diese Reaktion genützt, um wäßrige, selbstvernetzende Lacke zu formulieren, welche als Bindemittel ein Aminogruppen enthaltendes Acrylatcopolymerisat und als Vernetzer eine niedermolekulare Verbindung mit mindestens zwei Carbonylgruppen enthalten. Bei der Lagerung derartiger Lacke ist die Reaktion von Aminogruppen mit Carbonylgruppen auch in wäßriger Lösung nicht auszuschließen, sodaß nur eingeschränkt verwendbare Einkomponentenlacke zur Verfügung stehen.

Überraschenderweise wurde nun gefunden, daß die Herstellung von wäßrigen, selbstvernetzenden Polymerdispersionen zur Formulierung von lagerstabilen Einkomponentenlacken möglich ist, wenn Acetoacetyl- und Carboxylgruppen aufweisende Acrylatcopolymerisate mit einem Polyamin gemischt werden, welches zuerst als Neutralisationsmittel und während der Filmbildung als Vernetzungskomponente dient.

Die vorliegende Erfindung betrifft demgemäß ein Verfahren zur Herstellung von wäßrigen, selbstvernetzenden Polymerdispersionen auf der Basis von mit einer Vernetzungskomponente neutralisierten Acrylatcopolymerisaten, welches dadurch gekennzeichnet ist, daß man die Carboxylgruppen in einem mittels Emulsionspolymerisation erhaltenen Acrylatcopolymerisat (A), welches aus einer Monomerenmischung besteht, die
- (Aa) 3 bis 50: Gew.-%,vorzugsweise 10 bis 35 Gew.-%, Acetoacetylgruppen aufweisende (Meth)acrylatmonomere,
- (Ab) 1 bis 20: Gew.-%, vorzugsweise 3 bis 17 Gew.-%, α,β-ethylenisch ungesättigte Carbonsäuren, vorzugsweise (Meth)acrylsäure,
- (Ac) 30 bis 96: Gew.-%,vorzugsweise 48 bis 87 Gew.-%, (Meth)acrylsäurealkylester, deren Alkylreste 1 bis 18 C-Atome, vorzugsweise 1 bis 8 C-Atome, aufweisen, sowie gegebenenfalls Diester der Maleinsäure oder Fumarsäure mit Alkanolen, welche 1 bis 14 C-Atome aufweisen, und gegebenenfalls
- (Ad) bis zu 40: Gew.-%,vorzugsweise bis zu 20 Gew.-%, andere radikalisch polymerisierbare Monomere, wie Vinylaromaten, Vinylester, Hydroxyalkyl(meth)acrylate und (Meth)acrylamid
enthält, wobei die Bedingung gilt, daß das Acrylatcopolymerisat (A) Acetoacetylgruppen in einer Menge von 0,2 bis 2,4 Mol/kg, vorzugsweise von 0,5 bis 1,8 Mol/kg, und Carboxylgruppen in einer Menge von 0,15 bis 2,3 Mol/kg, vorzugsweise von 0,4 bis 1,7 Mol/kg, jeweils bezogen auf Festsubstanz, aufweist, und daß die Carboxylgruppen in einer Menge von 70 bis 96 Mol%, vorzugsweise von 80 bis 90 Mol-%, bezogen auf die Acetoacetylgruppen, vorliegen,
mit Polyaminen(B), die mindestens zwei primäre Aminogruppen im Molekül aufweisen, in einem Anteil von 60 bis 100 Mol-%, vorzugsweise von 90 bis 100 Mol-%, bezogen auf die gesamten primären Aminogruppen, unter Salzbildung umsetzt.

Die Erfindung betrifft weiters die erfindungsgemäß hergestellten Polymerdispersionen und deren Verwendung als Bindemittel für lagerstabile Einkomponentenlacke, die bei Raumtemperatur oder bei erhöhter Temperatur vernetzen.

Mit diesen Polymerdispersionen lassen sich Lacke formulieren, die weder Hilfslösemittel noch toxikologisch bedenkliche flüchtige Anteile aufweisen und blockfeste, lösemittelresistente Filme ergeben. Die mitverwendeten primären Polyamine dienen als Neutralisationsmittel zur Stabilisierung der wäßrigen Dispersion und schließlich als Vernetzungskomponente während der Filmbildung.

Das Acrylatcopolymerisat (A) wird in bekannter Weise nach dem Verfahren der Emulsionspolymerisation im wäßrigen Medium hergestellt. Dabei werden die Monomere (Aa) bis (Ad) in den im Hauptanspruch angegebenen Mengenverhältnissen eingesetzt.

Als Komponente (Aa) werden Acetoacetylgruppen aufweisende (Meth)acrylatmonomere, wie N-Acetoacetyl(meth)acrylamid, oder (Meth)acrylsäureacetoacetoxyalkylester, vorzugsweise der Ethylester, verwendet.

Die Komponente (Ab) besteht vorzugsweise aus Acryl- oder Methacrylsäure, doch können gegebenenfalls auch andere α,β-ethylenisch ungesättigte Carbonsäuren, wie Maleinsäure oder Fumarsäure, eingesetzt werden.

Die Komponente (Ac) enthält (Meth)acrylsäurealkylester, deren Alkylreste 1 bis 18 C-Atome, vorzugsweise 1 bis 8 C-Atome, aufweisen. Daneben können auch Diester der Maleinsäure oder Fumarsäure mit Alkoholen, welche 1 bis 14 C-Atome aufweisen, verwendet werden.

Als Komponente (Ad) kommen gegebenenfalls andere radikalisch polymerisierbare Monomere, wie Vinylaromaten, vorzugsweise Styrol, oder Vinylester, wie Vinylacetat, oder Hydroxyalkyl(meth)acrylate oder (Meth)acrylamid und deren Derivate zum Einsatz.

Es gilt die Bedingung, daß das Acrylatcopolymerisat (A) Acetoacetylgruppen in einer Menge von 0,2 bis 2,4 Mol/kg, vorzugsweise von 0,5 bis 1,8 Mol/kg, und Carboxylgruppen in einer Menge von 0,15 bis 2,3 Mol/kg, vorzugsweise von 0,4 bis 1,7 Mol/kg, jeweils bezogen auf Festsubstanz, enthält, und daß die Carboxylgruppen in einer Menge von 70 bis 96 Mol-%, vorzugsweise von 80 bis 90 Mol-%, bezogen auf die Acetoacetylgruppen, vorliegen.

Anschließend werden die Carboxylgruppen des Acrylatcopolymerisats (A) mit Polyaminen (B), die mindestens zwei primäre Aminogruppen im Molekül aufweisen, in einem Anteil von 60 bis 100 Mol-%, vorzugsweise von 90 bis 100 Mol-%, bezogen auf die gesamten primären Aminogruppen, unter Salzbildung umgesetzt.

Beispiele für Polyamine (B) sind Alkylendiamine, wie Ethylendiamin und dessen Homologe und Isomere, weiters diprimäre Polyalkylenpolyamine, wie Diethylentriamin, und andere Polyamine, wie Trimethylolpropanhexaethoxytriamin oder diprimäre Polyethoxydiamine.

Die erfindungsgemäß hergestellten Polymerdispersionen haben eine ausgezeichnete Lagerstabilität und ergeben Filme mit guten Beständigkeitseigenschaften. Sie können als Bindemittel für Industrielacke und Grundierungen eingesetzt werden. Weiters lassen sich mit ihnen Klarlacke formulieren, die zur Beschichtung von Holz, Kunststoff, Leder oder Papier verwendet werden, wobei vorteilhaft pH-Werte gewählt werden, bei denen keine Verfärbung der Substrate eintreten kann.

Die Vernetzung der Polymerdispersionen erfolgt durch Umsetzung der primären Aminogruppen der Komponente (B) mit den Ketogruppen der Acetoacetylgruppen des Acrylatcopolymerisats (A) unter Abspaltung von Wasser. Wie die Ergebnisse zeigen, verläuft die Vernetzungsreaktion bereits bei Raumtemperatur nach dem Abdunsten eines wesentlichen Anteils des Wassers.

Durch eine mäßige Erhöhung der Temperatur kann die Vernetzung noch wesentlich beschleunigt werden.

Die folgenden Beispiele erläutern die Erfindung, ohne sie in ihrem Umfang zu beschränken. Alle Angaben in Teilen oder Prozenten beziehen sich, sofern nichts anderes angegeben ist, auf Gewichtseinheiten.

### Beispiele 1 - 10:

In einem für die Emulsionspolymerisation geeigneten Reaktor werden 40 Tle deionisiertes Wasser sowie 27 Tle einer Flotte, welche 80 Tle deionisiertes Wasser, 100 Tle der in Tab. 1 angegebenen Monomerenmischung, 0,5 Tle eines mit 30 Mol Ethylenoxid polyethoxylierten Nonylphenols, 1 Tl Dodecylsulfonat, 0,2 Tle tert.-Dodecylmercaptan und 1 Tl Ammoniumperoxodisulfat enthält, auf 85°C erwärmt. Die verbleibenden 155,7 Tle der Flotte werden aus einem mit einem Rührer versehenen Zugabegefäß innerhalb von 2 Stunden gleichmäßig zugegeben. Der theoretische Feststoffgehalt von 45 % ist nach einer Nachreaktionszeit von 2 Stunden erreicht. Der Ansatz wird auf 25°C gekühlt und nach Zusatz einer 20 %igen wäßrigen Polyaminlösung entsprechend Tab. 2 zu verschiedenen Lackzusammensetzungen weiterverarbeitet.

In der Tabelle 1 werden folgende Abkürzungen verwendet:
- MAE: Methacrylsäureacetoacetoxyethylester
- DAMA: Diacetonmethacrylamid
- ACS: Acrylsäure
- MACS: Methacrylsäure
- MMA: Methylmethacrylat
- EAC: Ethylacrylat
- BAC: n-Butylacrylat
- BMA: n-Butylmethacrylat
- EHA: 2-Ethylhexylacrylat
- DBF: Dibutylfumarat
- ST: Styrol
- VT: Vinyltoluol
- HEMA: Hydroxyethylmethacrylat
- DETA: Diethylentriamin
- HDA: Hexamethylendiamin

### Prüfung der gemäß den Beispielen 1 bis 10 hergestellten Polymerdispersionen

### 1. Klarlacke

Aus den Polymerdispersionen gemäß Beispiel 1 bis 9 wurden Klarlacke aus 100 Tlen Festharz, 0,8 Tlen eines handelsüblichen Entschäumungsmittels, 0,2 Tlen eines handelsüblichen Verlaufmittels, gegebenenfalls einem Koaleszenzmittel, und deionisiertem Wasser Klarlacke hergestellt, die folgenden Prüfungen unterworfen wurden, deren Ergebnisse in Tabelle 2 zusammengefaßt sind:
Klebfreiheit: Drying Recorder, Glasstreifen, 150 µm Naßfilm-Schichtstärke, bei 20°C (Angabe in Minuten)
Schleifbarkeit: furniertes Holz, 150 µm Naßfilm-Schichtstärke, geprüft wird das Untersetzen von Schleifpapier (Körnung 320) nach 10 Hüben nach einer Trocknungszeit von 30 Minuten bei Raumtemperatur (0 = kein Untersetzen; MIN = Minimales Untersetzen. 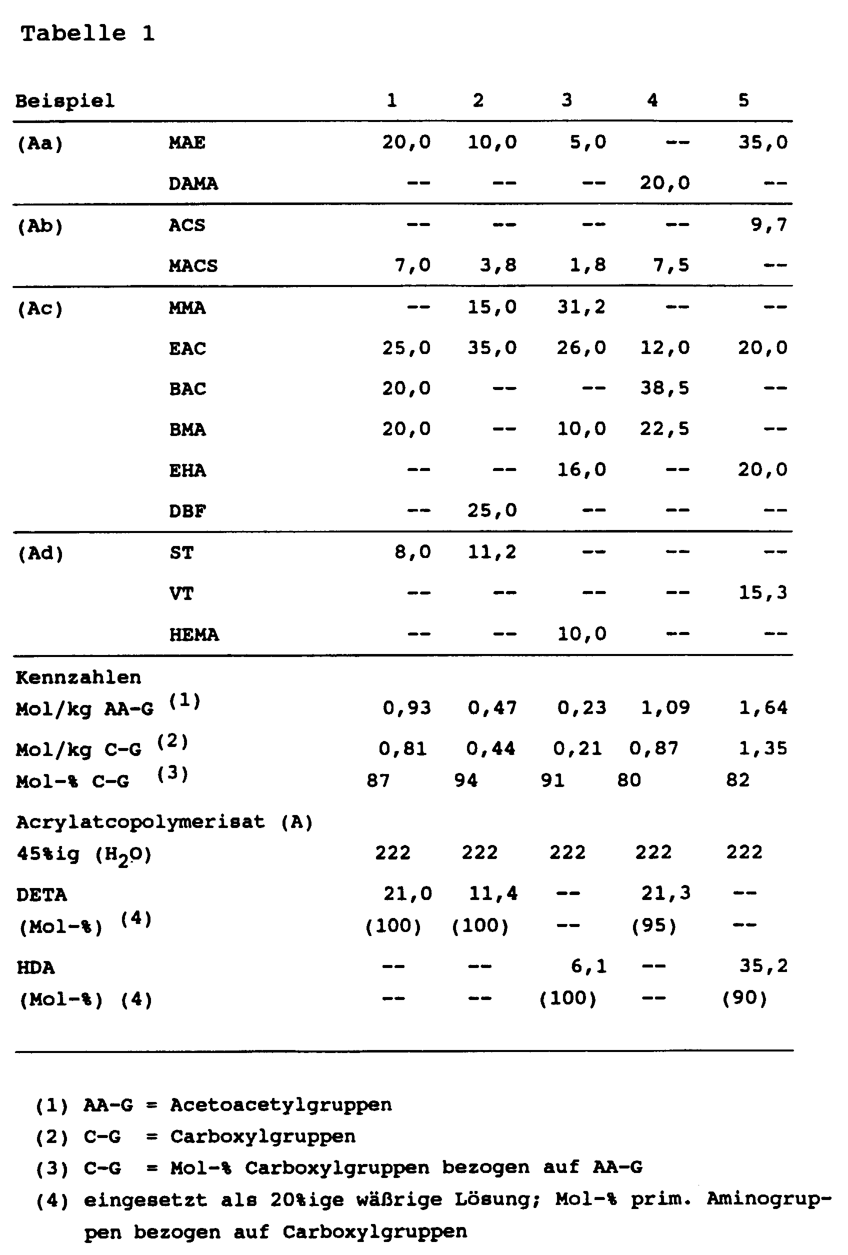 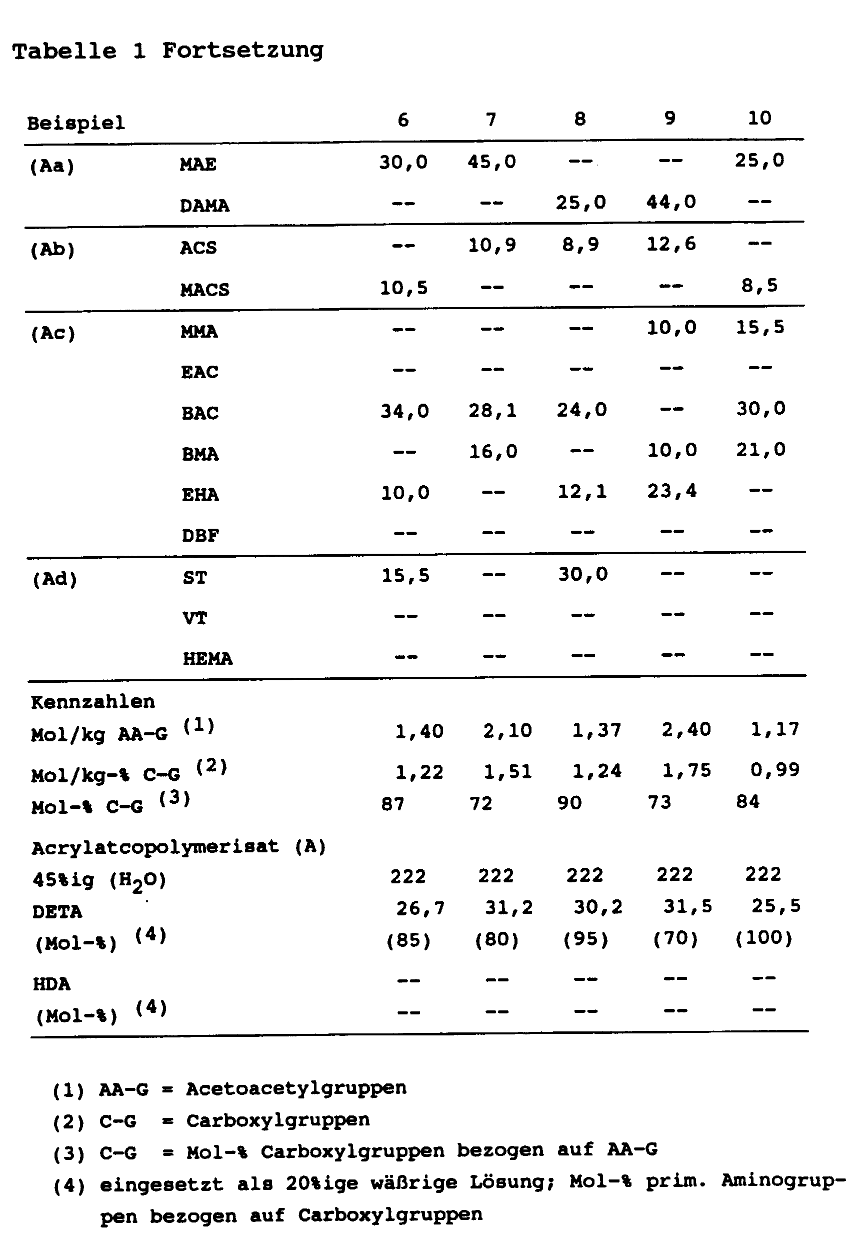
Pendelhärte nach KÖNIG (DIN 53157): Glasplatten, 120 bzw. 300 µm Naßfilm-Schichtstärke, Trocknungszeit von 24 Stunden bei 20°C, 60 % rel. Luftfeuchtigkeit.
Acetonbeständigkeit: furniertes Holz, 150 µm Naßfilm-Schichtstärke, Trocknung von 7 Tagen bei 20°C, 60 % rel. Luftfeuchtigkeit; geprüft wird durch Auflegen eines mit Aceton getränkten Wattebausches (nach der angegebenen Zeit zeigt der Film einen deutlichen Angriff bzw. eine Erweichung).
Tiefung nach ERICHSEN nach ISO 1520:
   Kugelfalltest mit Kugelschlag-Prüfgerät, Typ 304 (Firma Erichsen):
   Gitterschnitt nach DIN 53151:
   Bei allen drei Prüfungen beträgt die Trockenfilmschichtstärke ca. 30 µm auf 0,8 mm Stahlblech, Trocknungszeit von 24 Stunden bei 20°C, 60 % rel. Luftfeuchtigkeit.

### 2. Industrie-Weißlack (für Holz, Metall, Kunststoff)

Aus der Polymerdispersion gemäß Beispiel 5 wurde in üblicher Weise durch Vermahlen auf einer Rührwerkskugelmühle mit Titandioxid in einem Pigment-Bindemittelverhältnis von ca. 0,5:1 ein Weißlack folgender Formulierung hergestellt:
- 222,0 Tle: Polymerdispersion gemäß Beispiel 5, 45%ig
- 50,0 Tle: TiO₂, Rutyltyp
- 1,0 Tl: Entschäumer (silikonfrei)
- 0,2 Tle: Verlaufsmittel
- 0,2 Tle: Koaleszenzmittel
- 0,6 Tle: Korrosionsinhibitor

Der mit deionisiertem Wasser auf Spritzviskosität verdünnte Lack hatte einen Feststoffgehalt von ca. 40 %.

Prüfergebnisse (Methoden siehe auch unter 1)
Klebfreiheit: 50 µm Naßfilm-Schichtstärke, bei 20°C, 60 % rel. Luftfeuchtigkeit: ca. 20 Minuten
Acetonbeständigkeit: 90 µm Naßfilm-Schichtstärke, Trocknung von 7 Tagen bei 20°C, 60 % rel. Luftfeuchtigkeit: 60 Sekunden
Glanzgrad:gemessen mit Pocketgloss 60°: 76 %

### 3. Industrie-Grundierung, weiß (für Holz. Metall, Kunststoff)

Aus der Polymerdispersion gemäß Beispiel 1 wurde durch Vermahlen auf einer Rührwerkskugelmühle gemäß nachfolgender Formulierung eine wäßrige Grundierung hergestellt:
- 222,0 Tle: Polymerdispersion gemäß Beispiel 1, 45%ig
- 50,0 Tle: TiO₂, Rutyltyp
- 20,0 Tle: Calciumcarbonat
- 20,0 Tle: Talkum
- 1,0 Tl: Entschäumer (silikonfrei)
- 3,0 Tle: Koaleszenzmittel
- 0,5 Tle: Korrosionsinhibitor
- 20,0 Tle: H₂O, deionisiert

Der Feststoffgehalt der Grundierung betrug ca. 55 %.

Prüfergebnisse (Methoden siehe auch unter 1.)
Klebfreiheit: 50 µm Naßfilm-Schichtstärke, bei 20°C, 60 % rel. Luftfeuchtigkeit: ca. 15 Minuten
Schleifbarkeit: 150µm Naßfilm-Schichtstärke, Trocknungszeit 30 Minuten bei 20°C, 60 % rel. Luftfeuchtigkeit, Schleifpapier, Körnung 320, 10 Hübe: 0 = kein Untersetzen

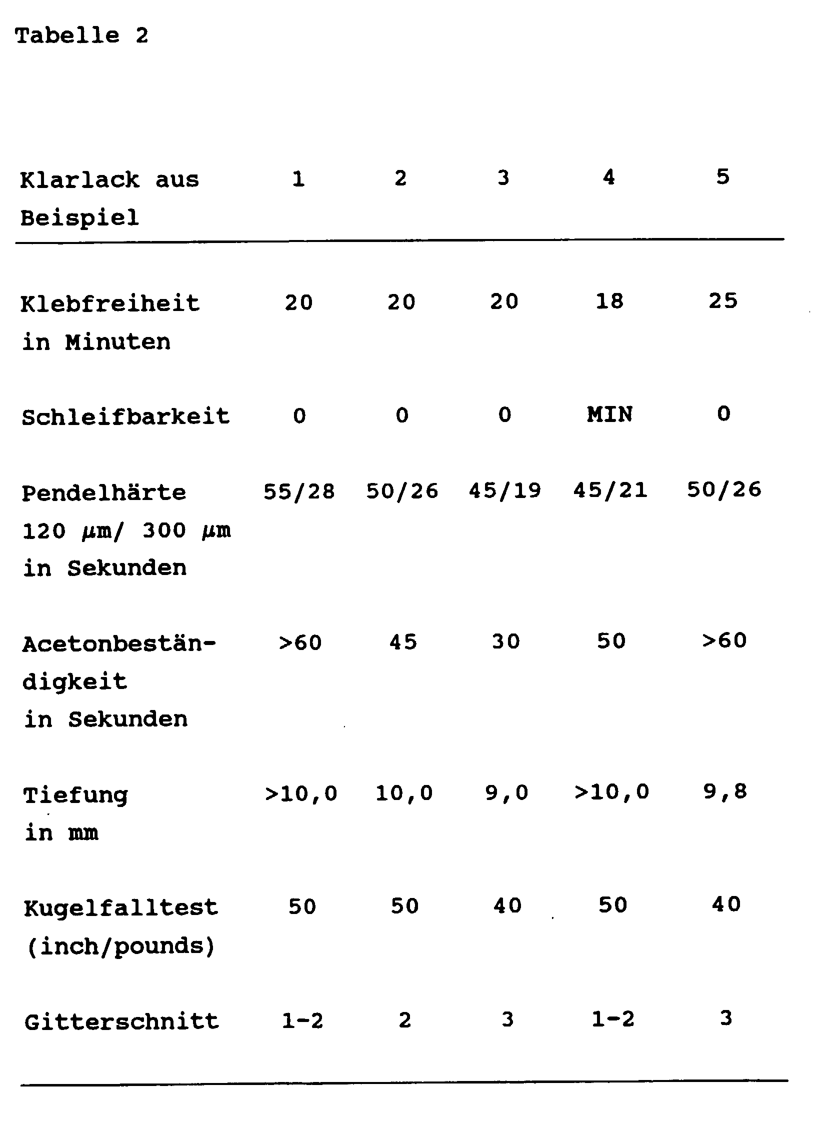

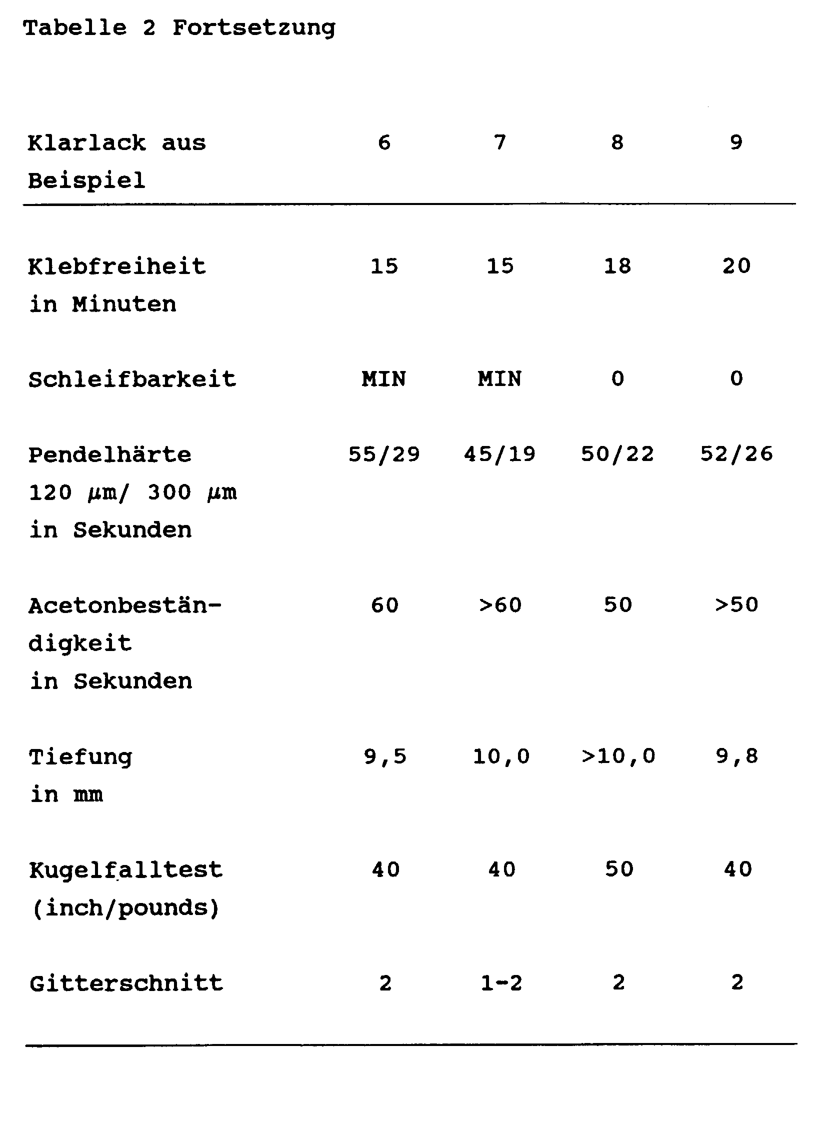

## Patentansprüche

1. Verfahren zur Herstellung von wäßrigen, selbstvernetzenden Polymerdispersionen auf der Basis von mit einer Vernetzungskomponente neutralisierten Acrylatcopolymerisaten, dadurch gekennzeichnet, daß man die Carboxylgruppen in einem mittels Emulsionspolymerisation erhaltenen Acrylatcopolymerisat (A), welches aus einer Monomerenmischung besteht, die
(Aa) 3 bis 50 Gew.-%, vorzugsweise 10 bis 35 Gew.-%, Acetoacetylgruppen aufweisende (Meth)acrylatmonomere,
(Ab) 1 bis 20 Gew.-%, vorzugsweise 3 bis 17 Gew.-%, α,β-ethylenisch ungesättigte Carbonsäuren, vorzugsweise (Meth)acrylsäure,
(Ac) 30 bis 96 Gew.-%, vorzugsweise 48 bis 87 Gew.-%, (Meth)acrylsäurealkylester deren Alkylreste 1 bis 18 C-Atome, vorzugsweise 1 bis 8 C-Atome, aufweisen, sowie gegebenenfalls Diester der Maleinsäure oder Fumarsäure mit Alkanolen, welche 1 bis 14 C-Atome aufweisen, und gegebenenfalls
(Ad) bis zu 40 Gew.-%, vorzugsweise bis zu 20 Gew.-%, andere radikalisch polymerisierbare Monomere, wie Vinylaromaten, Vinylester, Hydroxyalkyl(meth)acrylate und (Meth)acrylamid
enthält, wobei die Bedingung gilt, daß das Acrylatcopolymerisat (A) Acetoacetylgruppen in einer Menge von 0,2 bis 2,4 Mol/kg vorzugsweise von 0,5 bis 1,8 Mol/kg und Carboxylgruppen in einer Menge von 0,15 bis 2,3 Mol/kg, vorzugsweise von 0,4 bis 1,7 Mol/kg, jeweils bezogen auf Festsubstanz, aufweist, und daß die Carboxylgruppen in einer Menge von 70 bis 96 Mol-%, vorzugsweise von 80 bis 90 Mol-%, bezogen auf die Acetoacetylgruppen, vorliegen,
mit Polyaminen(B), die mindestens zwei primäre Aminogruppen im Molekül aufweisen, in einem Anteil von 60 bis 100 Mol-%, vorzugsweise von 90 bis 100 Mol-%, bezogen auf die gesamten primären Aminogruppen, unter Salzbildung umsetzt.

2. Wäßrige, selbstvernetzende Polymerdispersionen, hergestellt gemäß Anspruch 1.

3. Verwendung der gemäß Anspruch 1 hergestellten wäßrigen, selbstvernetzenden Polymerdispersionen als Bindemittel für lagerstabile Einkomponentenlacke, die bei Raumtemperatur oder bei erhöhter Temperatur vernetzen.

## Claims

1. Process for the preparation of aqueous, autocrosslinking polymer dispersions based on acrylic copolymers which are neutralized with a crosslinking component, characterized in that the carboxyl groups in an acrylate polymer (A) which is obtained by emulsion polymerization and is composed of a monomer mixture which comprises
(Aa) from 3 to 50 % by weight, preferably from 10 to 35% by weight, of acetoacetyl-containing (meth)acrylate monomers,
(Ab) from 1 to 20 % by weight, preferably from 3 to 17% by weight, of α,β-ethylenically unsaturated carboxylic acids, preferably (meth)acrylic acid,
(Ac) from 30 to 96 % by weight, preferably from 48 to 87% by weight, of alkyl (meth)acrylates whose alkyl radicals have 1 to 18 carbon atoms, preferably 1 to 8 carbon atoms, and, if desired, diesters of maleic acid or fumaric acid with alkanols having 1 to 14 carbon atoms, and, if desired,
(Ad) up to 40 % by weight, preferably up to 20% by weight, of other free-radically polymerizable monomers, such as aromatic vinyl compounds, vinyl esters, hydroxyalkyl (meth)acrylates and (meth)acrylamide,
with the proviso that the acrylate copolymer (A) contains acetoacetyl groups in a quantity of from 0.2 to 2.4 mol/kg, preferably from 0.5 to 1.8 mol/kg, and carboxyl groups in a quantity of from 0.15 to 2.3 mol/kg, preferably from 0.4 to 1.7 mol/kg, based in each case on solids, and that the carboxyl groups are present in a quantity of from 70 to 96 mol-%, preferably from 80 to 90 mol-%, based on the acetoacetyl groups,
are reacted, forming salts, in a proportion of from 60 to 100 mol-%, preferably from 90 to 100 mol-%, with polyamines (B) containing at least two primary amino groups in the molecule, the molar percentages being based on the totality of primary amino groups.

2. Aqueous, autocrosslinking polymer dispersions prepared according to Claim 1.

3. Use of the aqueous, autocrosslinking polymer dispersions prepared according to Claim 1 as binders for storage-stable one-component coating materials which crosslink at room temperature or at elevated temperature.

## Revendications

1. Procédé de préparation de dispersions aqueuses de polymères autoréticulables à base de produits de copolymérisation d'acrylate neutralisés avec un constituant de réticulation, caractérisé en ce que l'on fait réagir les groupes carboxyle présents dans un produit de copolymérisation d'acrylate (A) obtenu par polymérisation en émulsion, qui consiste en un mélange de monomères qui contient
(Aa) 3 à 50% en masse, de préférence 10 à 35% en masse, de monomères de (méth)acrylate présentant des groupes acétoacétyle,
(Ab) 1 à 20% en masse, de préférence 3 à 17% en masse, d'acides carboxyliques α,β-éthyléniquement insaturés, de préférence d'acide (méth)acrylique,
(Ac) 30 à 96% en masse, de préférence 48 à 87% en masse, d'alkylesters d'acide (méth)acrylique, dont les restes alkyle présentent 1 à 18 atomes de carbone, de préférence 1 à 8 atomes de carbone, et éventuellement de diesters de l'acide maléique ou d'acide fumarique avec des alcanols qui présentent 1 à 14 atomes de carbone, et éventuellement
(Ad) jusqu'à 40% en masse, de préférence jusqu'à 20% en masse, d'autres monomères polymérisables par voie radicalaire, tels que des vinylaromatiques, des vinylesters, des (méth)acrylates d'hydroxyalkyle et le (méth)acrylamide
à condition que le produit de copolymérisation d'acrylate (A) présente des groupes acétoacétyle en une quantité de 0,2 à 2,4 mol/kg, de préférence de 0,5 à 1,8 mol/kg, et des groupes carboxyle en une quantité de 0,15 à 2,3 mol/kg, de préférence de 0,4 à 1,7 mol/kg, à chaque fois par rapport à la substance solide, et que les groupes carboxyle soient présents en une quantité de 70 à 96 mol%, de préférence de 80 à 90 mol%, par rapport aux groupes acétoacétyle,
avec des polyamines (B) qui présentent au moins deux groupes amino primaires dans la molécule, en une proportion de 60 à 100 mol%, de préférence de 90 à 100 mol%, par rapport à la totalité des groupes amino primaires, avec formation de sel.

2. Dispersions aqueuses de polymères autoréticulables préparées selon la revendication 1.

3. Utilisation des dispersions aqueuses de polymères autoréticulables préparées selon la revendication 1 comme liants pour peintures à un seul constituant stables au stockage qui subissent une réticulation à la température ambiante ou à température élevée.
